# EUROPÄISCHE PATENTSCHRIFT

(11) **EP 4 247 684 B1**
(45) Veröffentlichungstag und Bekanntmachung des Hinweises auf die Patenterteilung: **26.06.2024**
(21) Anmeldenummer: 22803269.4
(22) Anmeldetag: 19.10.2022
(51) Int. Cl.: B60W 50/00, B60W 50/04, B60Q 1/04, B60W 30/12, B60Q 1/14

(54) **VERFAHREN UND PROZESSORSCHALTUNG ZUM STEUERN EINES KONFIGURATIONSZUSTANDS EINES FAHRZEUGGERÄTS EINES KRAFTFAHRZEUGS IN ABHÄNGIGKEIT VON EINEM KALIBIERZUSTAND DES JEWEILIGEN FAHRZEUGGERÄTS SOWIE ENTSPRECHEND BETREIBBARES KRAFTFAHRZEUG**
METHOD AND PROCESSOR CIRCUIT FOR CONTROLLING A CONFIGURATION STATE OF A VEHICLE DEVICE OF A MOTOR VEHICLE IN ACCORDANCE WITH A CALIBRATION STATE OF THE VEHICLE DEVICE IN QUESTION, AND MOTOR VEHICLE WHICH CAN BE OPERATED ACCORDINGLY
PROCÉDÉ ET CIRCUIT PROCESSEUR POUR ASSURER LA COMMANDE D'UN ÉTAT DE CONFIGURATION D'UN APPAREIL DE VÉHICULE D'UN VÉHICULE À MOTEUR, EN FONCTION D'UN ÉTAT D'ÉTALONNAGE DE L'APPAREIL DE VÉHICULE CONCERNÉ ET VÉHICULE À MOTEUR POUVANT ÊTRE ACTIONNÉ DE MANIÈRE CORRESPONDANTE

(30) Priorität: 22.10.2021 DE 102021127459
(43) Veröffentlichungstag der Anmeldung: 27.09.2023
(73) Patentinhaber: AUDI AG, 85057 Ingolstadt (DE)
(72) Erfinder: SCHMIDT, Valentin, 86633 Neuburg a.d. Donau (DE); DEBELEC, Marcel, 85053 Ingolstadt (DE)
(74) Vertreter: Hofstetter, Schurack & Partner
(86) Internationale Anmeldenummer: PCT/EP2022/079132
(87) Internationale Veröffentlichungsnummer: WO 2023/067022

(56) Entgegenhaltungen:
- DE-A1-102005 024 617
- DE-A1-102019 110 938
- DE-C1- 19 506 296
- US-A1- 2015 151 669
- US-A1- 2019 347 829

## Beschreibung

Die Erfindung betrifft ein Verfahren und eine Prozessorschaltung zum Steuern eines Konfigurationszustands zumindest eines Fahrzeuggeräts eines Kraftfahrzeugs. Die Steuerung des Konfigurationszustands nutzt dabei Informationen aus einer Selbstkalibrierroutine, die in dem Kraftfahrzeug eine automatisierte Kalibrierung zumindest eines Fahrzeuggeräts und/oder zumindest eines vorgeschalteten Hilfsgeräts durchführt, während sich das Kraftfahrzeug im Fahrbetrieb befindet. Die Erfindung umfasst auch ein Kraftfahrzeug mit einer entsprechenden Prozessorschaltung.

Eine Selbstkalibrierung einer Scheinwerferanlage eines Kraftfahrzeugs ist beispielsweise aus der DE 10 2013 105 506 A1 bekannt. Daraus geht hervor, dass die Scheinwerferanlage auch im Nachhinein, das heißt nach deren Einbau und nach der Übergabe des Kraftfahrzeugs an einen Fahrzeugnutzer, mittels einer Selbstkalibrierungsroutine justiert werden kann, um die Scheinwerferanlage an die tatsächliche Einbausituation im Kraftfahrzeug anzupassen. Die Selbstkalibrierung kann iterativ erfolgen, das heißt, es können wiederholt Kalibrierschritte durchgeführt werden, durch die sich allerdings mit fortschreitender Selbstkalibrierung immer weniger Änderungen oder immer kleinere Deltawerte in der Justierung der Scheinwerferanlage ergeben.

Zu Beginn der Selbstkalibrierung befindet sich die Scheinwerferanlage allerdings in einem unkonfigurierten oder nur teilkonfigurierten Zustand, weshalb eine Präzision beim Ausrichten einer Hell-Dunkel-Grenze der Scheinwerfer für einige Teilfunktionen, wie beispielsweise das Aussparen eines Fremdfahrzeugs aus dem Lichtkegel (blendfreies Fernlicht), noch derart ungenau sein kann, dass sich eventuell eine Blendung eines entgegenkommenden Verkehrsteilnehmers ergeben könnte.

Nach Aufbau und Inbetriebnahme des Fahrzeugs im Werk steht eine solche Teilfunktionen einer Scheinwerferanlage ab Kilometer 0 oder ab Nutzungsbeginn des Kraftfahrzeugs zur Verfügung. Zum Teil setzen die Teilfunktionen jedoch auf eine vollständige Kalibrierung der Scheinwerferlage oder eine Mindest-Kalibriergüte, also eine begrenzte Maximaltoleranz. Genauso kann auch bei einem bereit bei Auslieferung vollständig Kalibrierten Kraftfahrzeug dennoch während des Fahrbetriebs durchgehend eine Selbstkalibrierung mitlaufen, denn es kann auch zwischendurch im Fahrbetrieb zu Zuständen unzureichender Kalibrierung kommen, d.h. die Selbstkalibrierung gleicht z.B. ein Setzverhalten oder ähnliches im Fahrbetrieb aus.

Auch in Vorbereitung auf eine spätere Freischaltung (Functions on Demand) einer Teilfunktion muss die Kalibrierung bereits erfolgt sein, auch wenn die Funktion noch nicht vom Kunden aktiviert wurde.

Um sicher zu gehen, dass für jede Teilfunktion eine ausreichende Kalibriergüte vorhanden ist, muss deshalb schon bei der Herstellung eines Kraftfahrzeugs eine entsprechend aufwändige initiale Kalibrierung durchgeführt werden. Es entstehen daher Kosten für die Produktion und den Kundendienst bei der Inbetriebnahme inklusiver der initialen Kalibrierung einer Scheinwerferanlage.

Eine mangelhafte Kalibrierung einer Scheinwerferanlage kann beispielsweise mittels eines Verfahrens aus der DE 10 2020 000 292 A1 erkannt werden. Darin ist auch beschrieben, dass ein fehlerhaft kalibrierter Scheinwerfer nachträglich mittels einer Aktuatorik automatisiert korrekt ausgerichtet werden kann, um die Kalibrierung wieder herzustellen.

Eine Justierung oder Kalibrierung einer Scheinwerferanlage während eines Fahrbetriebs eines Kraftfahrzeugs ist auch aus der DE 10 2014 003 585 A1 bekannt.

Aus der DE 10 2019 207 612 A1 ist bekannt, in einem Kraftfahrzeug selektiv einzelne Fahrerassistenzfunktionen erst dann freizuschalten, wenn ein Selbstkalibrieralgorithmus eines Sensors, auf welchen die jeweilige Fahrerassistenzfunktion zurückgreift, erfolgreich abgeschlossen ist und dies auch bestätigt wird. Somit ist sichergestellt, dass eine Fahrerassistenzfunktion erst dann freigeschaltet ist, wenn der hierfür benötigte Sensor seine Selbstkalibrierung während des Fahrbetriebs des Kraftfahrzeugs erfolgreich beendet hat. Dieses binäre Sperren und Freischalten von Fahrerassistenzfunktionen weist aber den Nachteil auf, dass unter Umständen ein langer Zeitraum vergeht, in welchem im Kraftfahrzeug die jeweilige Fahrerassistenzfunktion noch nicht verfügbar ist.

Die DE 195 06 296 A offenbart ein Verfahren zur Ermittlung des Typs eines aus einer vorgegebenen Anzahl von Getriebetypen ausgewählten, an einen Antriebsmotor angekuppelten Getriebes, wobei jeder Getriebetyp durch die vorhandenen Getriebebaugruppen und eine oder mehrere zugehörige Übersetzungskonstanten individualisiert ist. Zur selbsttätigen Getriebetypermittlung wird vorgeschlagen, durch eine Getriebetypermittlungseinheit alle Sensoren und/ oder Aktoren des Getriebes zur Bestimmung der im Getriebe vorhandenen Baugruppen anzusteuern sowie Getriebe- und/ oder Motordrehzahlen zur Bestimmung der einen oder mehreren Übersetzungskonstanten zu erfassen und den Typ des Getriebes durch Vergleich der so bestimmten Getriebetypdaten mit entsprechenden, für jeden der vorgegebenen Getriebetypen vorab in der Getriebetypermittlungseinheit abgespeicherten Daten festzustellen.

Die DE 10 2005 024 617 A1 beschreibt ein Verfahren zur Bestimmung einer Größe bei einem Kraftfahrzeug mit einem Motor, einem Handschaltgetriebe, einer Kupplung und Rädern, wobei die Größe die Drehzahlübersetzung zwischen dem Motor und den Rädern repräsentiert, mit folgenden Schritten:
Erfassen eines die Drehgeschwindigkeit wenigstens eines Rades repräsentierenden ersten Drehzahlwertes, Erfassen eines die Drehgeschwindigkeit des Motors repräsentierenden zweiten Drehzahlwertes, Erfassen eines einen Kupplungszustand repräsentierenden Wertes, Bestimmung der Größe in Abhängigkeit von den erfassten Drehzahlwerten dann, wenn der den Kupplungszustand repräsentierende Wert den eingekuppelten Zustand anzeigt. Die Bestimmung der Größe erfolgt automatisch und ist ein selbstlernendes Verfahren, mittels dessen Übersetzungsverhältnisse eines Gesamt-Triebstranges bei Fahrzeugen mit Handschaltgetriebe für alle Gangstufen bestimmbar und in einem nichtflüchtigen Speicher ablegbar sind.

Aus der US 2019/347 829 A ist eine in einem Fahrzeug installierte Fahrzeugkamera bekannt, die eine Bildgebungsschaltung, eine Detektorschaltung und eine Kalibrierungsschaltung umfasst. Die Bildgebungsschaltung erzeugt Bilddaten. Die Detektorschaltung speichert vorbestimmte erste Befehlsinformationen und erkennt, ob die von der Abbildungsschaltung erzeugten Bilddaten die ersten Befehlsinformationen enthalten. Wenn die Detektorschaltung feststellt, dass die Bilddaten die ersten Befehlsinformationen enthalten, startet die Kalibrierungsschaltung einen Kalibrierungsprozess der Fahrzeugkamera.

Der Erfindung liegt die Aufgabe zugrunde, die Verfügbarkeit von zumindest einer Teilfunktion zumindest eines Fahrzeuggeräts eines Kraftfahrzeugs zu erhöhen, selbst wenn die Teilfunktion von einer Selbstkalibrierung des Fahrzeuggeräts und/oder von einer Selbstkalibrierung eines diesem zugeordneten Hilfsgeräts, beispielsweise eines Sensors, abhängig ist.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Als eine Lösung umfasst die Erfindung ein Verfahren zum Steuern eines Konfigurationszustands zumindest eines Fahrzeuggeräts eines Kraftfahrzeugs. Durch eine Prozessorschaltung werden einmalig oder wiederholt aus einer Kalibiereinrichtung des jeweiligen Fahrzeuggeräts und/oder eines von dem Fahrzeuggerät genutzten Hilfsgeräts jeweils Kalibrierzustandsdaten empfangen, die einen aktuellen Kalibrierzustand einer durch die jeweilige Kalibriereinrichtung während eines Fahrbetriebs des Kraftfahrzeugs durchgeführten Selbstkalibrierroutine signalisieren. Wie eingangs im Zusammenhang mit einer Scheinwerferanlage und einem Sensor beschrieben, geht das Verfahren davon aus, dass in dem Kraftfahrzeug zumindest ein Fahrzeuggerät vorhanden ist, bei welchem eine Selbstkalibrierungsroutine während des Fahrbetriebs des Kraftfahrzeugs durchgeführt wird, also während das Kraftfahrzeug bereits durch einen Fahrzeugnutzer benutzt wird. Zusätzlich oder alternativ dazu kann auch in zumindest einem Hilfsgerät, welches von dem jeweiligen Fahrzeuggerät zum Bereitstellen zumindest einer Teilfunktion genutzt wird, also beispielsweise in einem mit dem Fahrzeuggerät gekoppelten Sensor, eine Selbstkalibrierroutine während des Fahrbetriebs des Kraftfahrzeugs durchgeführt werden. Mit anderen Worten wird bei dem Verfahren davon ausgegangen, dass eine Kalibriergüte oder eine Genauigkeit oder Justierung zumindest einer Komponente in dem Fahrzeuggerät und/oder dem Hilfsgerät während des Fahrbetriebs durch die Selbstkalibrierungsroutine durchgehend und/oder schrittweise verbessert wird. Dies wird durch die Prozessorschaltung beobachtet, indem die Prozessorschaltung Kalibrierzustandsdaten der jeweiligen Selbstkalibrierungsroutine empfängt oder beobachtet. Die Prozessorschaltung kann beispielsweise in einem Steuergerät des Kraftfahrzeugs oder einem Zentralcomputer des Kraftfahrzeugs (so genannte Head Unit) oder in einem so genannten Backend-Server, also einem stationären Computer des Internets, bereitgestellt sein. Die Prozessorschaltung kann auch als verteilte Schaltung teils beispielsweise in dem Backend-Server und dem Zentralcomputer realisiert sein. Eine Kopplung der Bestandteile einer solchen verteilten Schaltung kann beispielsweise über Kommunikationsverbindungen, beispielsweise Internetverbindungen und/oder Funkverbindungen und/oder Feldbusverbindungen erfolgen.

Um das zumindest eine Fahrzeuggerät in seiner Funktionsweise an die aktuell verfügbare Kalibriergüte oder Justierung des jeweiligen Fahrzeuggeräts und/oder des jeweiligen Hilfsgeräts anzupassen, umfasst das Verfahren, dass durch die Prozessorschaltung den jeweils aktuellen Kalibrierzustandsdaten gemäß einer vorgegebenen Auswertevorschrift ein Fortschrittswert zugeordnet wird. Die Kalibrierzustandsdaten werden also auf einen Fortschrittswert abgebildet. In Abhängigkeit von dem aktuellen Fortschrittswert wird aus mehreren vorgegebenen Konfigurationsdatensätzen ein solcher Konfigurationsdatensatz ausgewählt, der dann einen Konfigurationszustand des jeweiligen Fahrzeuggeräts festlegt, indem das Fahrzeuggerät mittels des ausgewählten Konfigurationsdatensatzes konfiguriert wird. Durch den jeweiligen Konfigurationsdatensatz wird zumindest ein Funktionsparameter der zumindest einen Teilfunktion für deren Ausführung festgelegt. Mit anderen Worten werden also die Kalibrierzustandsdaten daraufhin ausgewertet oder analysiert, wie weit der Fortschritt der Selbstkalibrierung bereits ist. Dies ergibt den Fortschrittswert. Anders als im Stand der Technik wird dann nicht erst bei Erreichen eines bestimmten Fortschrittswerts eine Teilfunktion freigeschaltet oder noch blockiert gehalten, sondern es wird davon ausgegangen, dass die Teilfunktion bereits vorher schon ausgeführt werden kann und lediglich die Art und Weise, wie sie ausgeführt wird, wird dadurch an den aktuellen Kalibrierzustand angepasst, dass mittels des jeweiligen Konfigurationsdatensatzes ein Funktionsparameter der jeweiligen Teilfunktion angepasst oder verändert oder nachgeführt wird . Beispielsweise kann also ein zugelassener Mindestabstand beispielsweise einer Hell-Dunkel-Grenze des Scheinwerferlichts zu einem erkannten entgegenkommenden Verkehrsteilnehmer in Abhängigkeit von dem Fortschrittswert eingestellt oder festgelegt werden. Je größer der Fortschritt der Selbstkalibrierung ist, desto enger oder näher kann die Hell-Dunkel-Grenze an einen erkannten entgegenkommenden Verkehrsteilnehmer herangeführt werden, da durch die fortgeschrittene Selbstkalibrierung eine entsprechende Genauigkeit der Teilfunktion "adaptives Fernlicht" beim Ausrichten der Hell-Dunkel-Grenze zur Verfügung steht. Weitere Beispiele für Fahrzeuggeräte, die mittels des Verfahrens in Abhängigkeit von den Kalibrierzustandsdaten konfiguriert werden können, sind in dieser Beschreibung im weiteren Verlauf noch gegeben. Der Funktionsparameter entscheidet also nicht darüber, ob die Teilfunktion freigeschaltet ist oder nicht, sondern es wird nur beispielsweise eine Abstandswert und/oder ein Zeitwert und/oder ein Leistungswert eingestellt und dabei die Teilfunktion aber grundsätzlich verfügbar gemacht oder freigeschaltet.

Durch die Erfindung ergibt sich der Vorteil, dass in einem Kraftfahrzeug eine Teilfunktion nicht hart abgeschaltet oder blockiert bleiben muss, so lange bis ein Sensor seine Selbstkalibrierung vollständig ausgeführt hat. Stattdessen kann in Abhängigkeit vom aktuellen Fortschritt der Selbstkalibrierung die jeweilige Teilfunktion mit einem entsprechenden Konfigurationsdatensatz an die aktuell verfügbare Kalibriergüte oder den aktuellen Fortschrittswert der Selbstkalibrierung angepasst werden, indem zumindest ein Funktionsparameter der Teilfunktion verändert oder eingestellt oder nachgeführt wird. Zwischen dem Zustand "vollständig gesperrt" und "vollständig freigeschaltet" gibt es für eine Teilfunktion also zumindest einen, bevorzugt mehrere Zwischenstufen bei der Konfiguration. Es können beispielsweise zwei Konfigurationsdatensätze oder mehr als zwei Konfigurationsdatensätze vorgesehen sein, so dass für entsprechend unterschiedliche Fortschrittswerte, also zwei oder mehr als zwei unterschiedliche Fortschrittswerte, jeweils ein anderer Konfigurationsdatensatz und damit jeweils ein anderer Wert für den zumindest einen Funktionsparameter der Teilfunktion eingestellt wird. Es kann auch eine kontinuierliche Anpassung zumindest eines Funktionsparameters in Abhängigkeit von einer kontinuierlichen Veränderung des Fortschrittswerts erfolgen, wenn der Fortschrittswert beispielsweise als Integer oder als Fließkommawert digital repräsentiert ist. Dann kann beispielsweise mittels einer Kennlinie der Fortschrittswert auf einen entsprechenden Wert des jeweiligen Funktionsparameters abgebildet oder umgerechnet werden.

Die Erfindung umfasst auch Weiterbildungen, durch die sich zusätzliche Vorteile ergeben.

Die beschriebene Kalibriereinrichtung kann dem Stand der Technik entnommen werden, wie er beispielweise in der Einleitung dieser Beschreibung genannt ist. Es kann sich beispielsweise um eine Software handeln, die durch ein Steuergerät ausgeführt werden kann. Auch die Selbstkalibrierroutine an sich kann in an sich bekannter Weise vom Fachmann ausgestaltet werden und z.B. auf einem Programmcode beruhen.

Eine Weiterbildung umfasst, dass die Auswertevorschrift umfasst, dass die aktuellen Kalibrierzustandsdaten auf ein vorbestimmtes Werteintervall abgebildet werden, durch welches ein Fortschritt der Selbstkalibrierroutine als Zahlenwert beschrieben ist, und hierdurch den Kalibrierzustandsdaten der Fortschrittswert aus dem Werteintervall zugeordnet wird. Durch Zusammenfassen der Kalibrierzustandsdaten aus der jeweiligen Selbstkalibrierungsroutine zu einem einzelnen Zahlenwert aus einem vorbekannten Zahlenintervall ergibt sich der Vorteil, dass die Auswahl eines geeigneten Konfigurationsdatensatzes durch einen einzelnen Zahlenwert gesteuert werden kann. Welche Kalibrierzustandsdaten aus einer Selbstkalibrierungsroutine empfangen werden, kann sich je nach Fahrzeuggerät und/oder Hilfsgerät unterscheiden, so dass durch den beschriebenen Zwischenschritt der Auswertevorschrift die Wahl des Konfigurationsdatensatzes in Abhängigkeit von dem Fortschrittswert unabhängig von einer Ausgestaltung oder einer Struktur der Kalibrierzustandsdaten erfolgen kann. Somit steht einem Fachmann ein Werkzeug bereit, um für unterschiedliche Fahrzeuggeräte und/oder Hilfsgeräte, die unterschiedlich strukturierte Kalibrierzustandsdaten (beispielsweise unterschiedliche Datenformate und/oder unterschiedliche Wertangaben und/oder Messgrößen) bereitstellen, dennoch einheitlich mittels des resultierenden Zahlenwerts die Auswahl des Konfigurationsdatensatzes gesteuert werden kann. Das Abbilden kann beispielsweise dadurch geschehen, dass Werteintervalle von Werten, die in den Kalibrierzustandsdaten angegeben werden, jeweils einem vorbestimmten Zahlenwert zugeordnet werden. Der Zahlenwert kann beispielsweise in einem Bereich von null Prozent bis 100 Prozent liegen, wobei null Prozent den initialen Kalibrierzustand oder unkalibrierten Zustand signalisiert und 100 Prozent eine abgeschlossene Selbstkalibrierroutine signalisieren kann.

Eine Weiterbildung umfasst, dass anhand des ermittelten Fortschrittwerts mittels eines Schwellenwertvergleichs ermittelt wird, welcher der vorgegebenen Konfigurationsdatensätze auszuwählen ist, wobei den mehreren, unterschiedlichen Schwellenwerten jeweils ein anderer der Konfigurationsdatensätze zugeordnet ist. Durch einen Schwellenwertvergleich kann ermittelt werden, ob der Fortschrittswert bereits oberhalb oder unterhalb einer jeweils vorgegebenen Schwelle oder eines Schwellenwerts liegt. Es können beispielsweise zwei oder drei oder mehr als drei unterschiedliche Schwellenwerte festgelegt werden. Überschreitet oder unterschreitet der Fortschrittswert dann jeweils einen Schwellenwert, so wird hierdurch ein anderer Konfigurationsdatensatz ausgewählt, der dann in dem Fahrzeuggerät zum Konfigurieren der zumindest einen Teilfunktion genutzt oder verwendet wird, also es wird der zumindest eine Funktionsparameter in der jeweiligen Teilfunktion gemäß dem aktuell ausgewählten Konfigurationsdatensatz eingestellt oder verändert. Somit kann sukzessive oder schrittweise die Konfiguration des jeweiligen Fahrzeuggeräts in Abhängigkeit von dem Fortschritt gemäß dem Fortschrittswert nachgeführt oder nachgesteuert werden. Insbesondere wird durch die mehreren Konfigurationsdatensätze nicht nur zwischen einer blockierten und einer freigeschalteten Teilfunktion umgeschaltet, sondern es gibt zumindest einen Zwischenschritt bei der Konfiguration, so dass die Teilfunktion zwar bereits ausführbar ist oder zum Ausführen aktiviert werden kann, aber der zumindest eine Funktionsparameter zumindest zwei unterschiedliche Werte mittels unterschiedlicher Konfigurationsdatensätze zugeordnet bekommt, so dass sich die jeweilige Teilfunktion beim Ausführen jeweils anders verhält.

Eine Weiterbildung umfasst in diesem Zusammenhang, dass durch den jeweiligen Konfigurationsdatensatz in zumindest einer Teilfunktion ein Parameterwert des zumindest einen Funktionsparameters der Teilfunktion eingestellt wird, wobei durch den Parameterwert bei einer Ausführung der Teilfunktion eine Ausprägung eines Merkmals der Teilfunktion (z.B. Helligkeit, Abmessung) und/oder ein Sicherheitsabstand für einen Justiervorgang (z.B. ein Abstand zu einem erkannten Verkehrsteilnehmer) und/oder eine Einsatzumgebung für die Teilfunktion (z.B. Verkehrsdichte, Anzahl umgebender Verkehrsteilnehmer) eingestellt wird. In Bezug auf die Ausprägung eines Merkmals kann beispielsweise ein Helligkeitswert und/oder eine Größe oder Abmessung einer ausgegebenen Projektion eingestellt werden. Ist beispielsweise eine Kalibriergüte oder eine Selbstkalibrierung eines Projektors zum Projizieren eines Leuchtbilds auf einen Straßenuntergrund noch nicht vollständig abgeschlossen, so kann beispielsweise eine Detailauflösung noch zu gering sein, um eine Projektion kleiner als eine bestimmte Abmessung zu projizieren. Wird hier als Merkmal der Teilfunktion die Abmessung der Projektion entsprechend größer gewählt, so kann hierdurch die mangelnde Detailauflösung kaschiert werden. Ein Sicherheitsabstand kann beispielsweise den Abstand zu einem erkannten Verkehrsteilnehmer betreffen, wenn es um das Einstellen oder Ausrichten einer Hell-Dunkel-Grenze eines adaptiven Scheinwerferlichts mittels beispielsweise eines Matrixscheinwerfers geht. Eine Einsatzumgebung kann dahingehend variiert werden, dass beispielsweise ein Wert für eine Verkehrsdichte, beispielsweise eine Anzahl umgebender Verkehrsteilnehmer, vorgegeben wird, die nicht überschritten werden darf, wenn die Teilfunktion aktiv ist, beispielsweise ein automatisiertes Querführen (Lenken) und/oder ein automatisiertes Längsführen (Beschleunigen und/oder Bremsen). Hierdurch kann verhindert werden, dass die Teilfunktion in einer zu komplexen Fahrumgebung verwendet wird, so lange die Selbstkalibrierung noch nicht vollständig abgeschlossen ist. Dies kann insbesondere für ein Steuergerät eines Fahrerassistenzsystems und/oder ein Steuergerät für eine Scheinwerferanlage vorteilhaft sein.

Eine Weiterbildung umfasst, dass das zumindest eine Fahrzeuggerät eine Scheinwerferanlage umfasst und bei zumindest einer der folgenden Teilfunktionen der Scheinwerferanlage mittels des jeweiligen Konfigurationsdatensatzes folgendes konfiguriert wird.

Im Falle eines adaptiven Scheinwerferlichts kann in besagter Weise der Abstand einer Ausleuchtlücke zu einem detektierten Verkehrsteilnehmer oder Fremdfahrzeug derart eingestellt werden, dass er stets größer als ein vorgegebener Mindestabstand ist. Mit anderen Worten wird um den jeweiligen Verkehrsteilnehmer oder das jeweilige Fremdfahrzeug ein Sicherheitsabstand in Bezug auf die Ausrichtung oder Justierung einer Hell-Dunkel-Grenze vorgegeben, um hierdurch in vorteilhafter Weise ein Blenden eines Fahrers und/oder einer Kamera in dem Fremdfahrzeug zu vermeiden. Im Zusammenhang mit einem Markierungslicht für Verkehrsobjekte am Straßenrand kann vorgegeben werden, dass ein Verkehrsobjekt nur dann angestrahlt oder angeleuchtet wird, wenn es eine Mindestobjektgröße aufweist. So ist in vorteilhafter Weise sichergestellt, dass mittels eines Markierungslichts das Verkehrsobjekt zumindest teilweise angeleuchtet wird. Bei einem zu kleinen Verkehrsobjekt kann bei noch unvollständiger Selbstkalibrierung ansonsten das Markierungslicht an dem Verkehrsobjekt vorbeigerichtet sein.

Im Zusammenhang mit einer Lichtinszenierung, also beispielsweise einer Projektion eines Leuchtsymbols auf einen Straßenuntergrund, kann eine Auswahl des auf die Projektionsfläche (beispielsweise den Straßenuntergrund) der Fahrumgebung projizierten Leuchtmusters gesteuert oder festgelegt werden. So ist sichergestellt, dass in Abhängigkeit vom Fortschrittswert der Selbstkalibrierung ein passendes Leuchtmuster verwendet wird, das bei diesem Stand des Fortschritts bereits zuverlässig projiziert werden kann, ohne dass es beispielsweise verzerrt dargestellt wird. Das Markierungslicht kann beispielsweise eine Schilderentblendung zum Beleuchten eines anhand einer Straßenkarte und/oder einer Bildverarbeitung eines Kamerabilds des Kraftfahrzeugs erkanntes Verkehrsschild sein.

Eine weitere Teilfunktion, die mittels des Konfigurationsdatensatzes gesteuert oder konfiguriert werden kann, ist ein Spurlicht, dessen Breite und/oder Ausleuchtentfernung (maximaler Abstand der Hell-Dunkel-Grenze ebenfalls in Abhängigkeit von dem Fortschrittswert gesteuert werden kann.
- bei einem adaptiven Fernlicht ein Abstand einer Ausleuchtlücke zu einem detektierten Fremdfahrzeug,
- bei einem Markierungslicht für Verkehrsobjekte am Straßenrand eine Mindestobjektgröße,
- bei einer Lichtinszenierung eine Auswahl eines auf einer Projektionsfläche einer Fahrzeugumgebung projizierten Leuchtmusters.

Eine Weiterbildung umfasst, dass das zumindest eine Fahrzeuggerät ein Steuergerät für eine automatisierte Spurführung (Lane-Assist-Funktionalität) umfasst und bei zumindest einer der folgenden Teilfunktionen des Steuergeräts mittels des jeweiligen Konfigurationsdatensatzes folgendes konfiguriert wird: bei einer automatisierten Spurhaltefunktion eine maximal zulässige Abweichung von einer Spurmittellinie, ab welcher eine Rückführung zur Spurmitte erfolgt. Je näher das Kraftfahrzeug an einen Rand einer Fahrspur (Track) geführt wird, desto genauer muss die Vermessung der Umgebung des Kraftfahrzeugs sein. Ist beispielsweise als Hilfsgerät eine Umgebungserkennung noch in der Selbstkalibrierung begriffen, also der Fortschrittswert noch nicht auf dem beispielsweise maximalen Wert, so dass die Selbstkalibrierroutine noch eine Justierung oder Kalibrierung vornimmt, kann es von Vorteil sein, die Spurführung näher an der Spurmittellinie zu halten oder in einem engeren Streifen um die Spurmittellinie herum fahren zu lassen, so dass eine Annäherung an eine unter Umständen ungenau erfasste Fahrspurmarkierung vermieden wird.

Eine weitere Frage, mit der sich die Erfindung beschäftigt, ist die Umrechnung der Kalibrierzustandsdaten in den Fortschrittswert, der für die Auswahl aus den Konfigurationsdatensätzen genutzt werden kann.

Eine Weiterbildung hierzu umfasst, dass die Kalibrierzustandsdaten eine Positionsangabe zu einer Geoposition zumindest eines Verkehrsobjekts in einer Fahrzeugumgebung signalisieren und der Fortschrittswert als eine Funktion einer Differenz der Positionsangabe und einer Referenzangabe berechnet wird. Hiermit kann ein Fortschritt einer Selbstkalibrierung einer Umgebungserkennung oder Umgebungserfassung geprüft werden. Wird beispielsweise mittels einer Kamera und einer Bildverarbeitung die Relativposition des Kraftfahrzeug zu Verkehrsobjekten in der Umgebung ermittelt und dies in eine absolute Geoposition umgerechnet (basierend auf der Relativposition und der mittels eines Empfängers für ein Positionssignal eines GNSS (Global Navigation Satellite System), beispielsweise des GPS, ermittelten Geoposition des Kraftfahrzeugs), so kann die derart ermittelte Geoposition eines Verkehrsobjekts mit einer Referenzangabe verglichen werden, die beispielsweise aus einer digitalen Straßenkarte entnommen werden kann. Die Differenz der Positionsangabe und der Referenzangabe ist ein Maß für die Lokalisationsgenauigkeit, die für das zumindest eine Verkehrsobjekt aktuell bei dem derzeitigen Fortschritt der Selbstkalibrierroutine erzielt werden kann. Die Differenz kann beispielsweise mittels einer Abbildungskennlinie auf einen Fortschrittswert abgebildet werden, der beispielsweise in einem Bereich von null Prozent bis 100 Prozent festgelegt werden kann.

Eine Weiterbildung umfasst, dass die Kalibrierzustandsdaten eine Korrekturschrittweite signalisieren, die durch die Selbstkalibrierroutine in einer vergangenen Iteration angewendet wurde, und die Korrekturschrittweite oder eine mittlere Schrittweite oder ein zeitlicher Gradient des zeitlichen Verlauf mehrerer vergangener Korrekturschrittweiten ermittelt und durch eine vorbestimmte Abbildungsfunktion, nämlich die Auswertevorschrift, auf zu dem Fortschrittswert umgerechnet wird. Es wurde beobachtet, dass man sich zunutze machen kann, dass eine Selbstkalibrierroutine iterativ oder wiederholt Korrekturschritte vornimmt, und hierdurch den letzten Korrekturschritt daraufhin überprüft, welche Verbesserung sich bei der Justierung des Fahrzeuggeräts und/oder des Hilfsgeräts ergeben hat. Je genauer ein Fahrzeuggerät/Hilfsgerät gemäß einem vorgegebenen Kalibriermaß arbeitet oder funktioniert, desto kleiner fallen die weiteren Korrekturschritte aus. Dies kann als Maß für den Fortschritt der Selbstkalibrierung in vorteilhafter Weise genutzt werden.

Hier haben sich drei unterschiedliche Vorgehensweisen als vorteilhaft erwiesen. Es kann die Korrekturschrittweite selbst, beispielsweise deren Betrag, verwendet werden. Zusätzlich oder alternativ dazu kann eine Korrekturschrittweite mehrerer aufeinanderfolgender Iterationen zu einer mittleren Schrittweise, also zu einem Mittelwert, verrechnet werden. Dieses Maß hat sich als besonders robuste Aussage erwiesen. Es kann zusätzlich oder alternativ dazu ein zeitlicher Gradient der Werte der Korrekturschrittweite über mehrere aufeinanderfolgende Iterationen hinweg ermittelt werden. Der zeitliche Gradient oder die Steigung dieses zeitlichen Verlaufs gibt ein Maß für die asymptotische Annäherung an eine Sollkalibrierung an, so dass anhand des Gradienten eine voraussichtliche zeitliche Entwicklung der weiteren Schrittweite geschätzt werden kann. Mit anderen Worten kann anhand des Gradienten das Setzverhalten der Selbstkalibrierroutine oder der Selbstkalibrierung geschätzt werden. In Abhängigkeit von dem Gradienten kann festgelegt werden, ob sich für eine Teilfunktion noch eine deutliche Verbesserung der Funktionsweise des Fahrzeuggeräts und/oder des Hilfsgeräts ergibt oder ob das Fahrzeuggerät/Hilfsgerät bereits sein volles funktionales Potential oder seine Funktionsfähigkeit vollständig oder ausreichend genug (Gradientenwert kleiner als ein Schwellenwert) erreicht hat und die Teilfunktion freigeschaltet werden kann.

Eine Weiterbildung umfasst, dass über eine Ausgabeeinrichtung an einen Benutzer des Kraftfahrzeus eine Rückmeldung über den Fortschrittswert und/oder darüber, welcher Konfigurationsdatensatz aktuell verwendet wird, ausgegeben wird. Hierdurch kann verhindert werden, dass der Benutzer irrtümlicherweise erwartet, dass ihm eine vorgegebene Teilfunktion zur Verfügung steht. Erkennt der Benutzer am Fortschrittswert, dass eine Selbstkalibrierroutine noch nicht vollständig abgeschlossen ist, so kann er entsprechend nachvollziehen oder erkennen, dass eine davon abhängige Teilfunktion noch nicht freigeschaltet ist.

Eine Weiterbildung umfasst, dass in dem Kraftfahrzeug das jeweilige Fahrzeuggerät mit seiner Selbstkalibrierroutine und/oder das jeweilige Hilfsgeräts mit seiner Selbstkalibrierroutine im unkalibrierten oder teilkalibrierten Zustand eingebaut wird und nach dem Einbau in einem Fahrbetrieb des Kraftfahrzeugs die jeweilige Selbstkalibrierroutine zum Finalisieren der Kalibrierung betrieben wird. Dies verringert in vorteilhafter Weise die Herstellungskosten des Kraftfahrzeugs, da dieses bereits an einen Benutzer übergeben oder zur Benutzung freigegeben werden kann, selbst wenn für das Fahrzeuggerät und/oder das Hilfsgerät noch keine vollständige Kalibrierung, das heißt keine vollständige Anpassung an das Kraftfahrzeug und/oder die Einbauposition, vorliegt. Dies kann dann während des Fahrbetriebs nachgeholt werden.

Als eine weitere Lösung umfasst die Erfindung eine Prozessorschaltung, die dazu eingerichtet ist, eine Ausführungsform des erfindungsgemäßen Verfahrens durchzuführen. Die Prozessorschaltung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessorschaltung Programmcode aufweisen, der dazu eingerichtet ist, bei Ausführen durch die Prozessorschaltung die Ausführungsform des erfindungsgemäßen Verfahrens durchzuführen. Der Programmcode kann in einem Datenspeicher der Prozessorschaltung gespeichert sein.

Eine Weiterbildung umfasst, dass die Prozessorschaltung zumindest ein Steuergerät und/oder einen Zentralrechner für ein Kraftfahrzeug und/oder einen Backendserver für das Internet umfasst. Die Prozessorschaltung kann beispielsweise mittels eines Steuergeräts oder eines Verbunds aus mehreren Steuergeräten in dem Kraftfahrzeug bereitgestellt sein. Zusätzlich oder alternativ dazu kann ein so genannter Zentralrechner oder eine so genannte Head-Unit des Kraftfahrzeugs dazu genutzt werden, die Prozessorschaltung bereitzustellen. Eine Head-Unit stellt einen Computer im Kraftfahrzeug dar, welche für mehrere unterschiedliche Steueraufgaben mittels Software frei programmiert werden kann. Zusätzlich oder alternativ dazu kann eine Unterstützung von außerhalb des Kraftfahrzeugs durch einen so genannten Backendserver erfolgen, der stationär betrieben werden kann und mit dem Kraftfahrzeug über eine Kommunikationsverbindung gekoppelt sein kann. Die Kommunikationsverbindung kann beispielsweise auf einer Internetverbindung und/oder einer Mobilfunkverbindung beruhen.

Als eine weitere Lösung umfasst die Erfindung ein Kraftfahrzeug mit einer Ausführungsform der erfindungsgemäßen Prozessorschaltung. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs;
- Fig. 2: ein Flussschaudiagramm einer Ausführungsform des erfindungsgemäßen Verfahrens;
- Fig. 3: eine Skizze zur Veranschaulichung einer Freischaltung von Teilfunktionen in Abhängigkeit eines Fortschrittswerts; und
- Fig. 4: eine Skizze zur Veranschaulichung möglicher Teilfunktionen, wie sie in dem Kraftfahrzeug von Fig. 1 gemäß dem Verfahren von Fig. 2 wahlweise freigeschaltet oder blockiert werden können.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

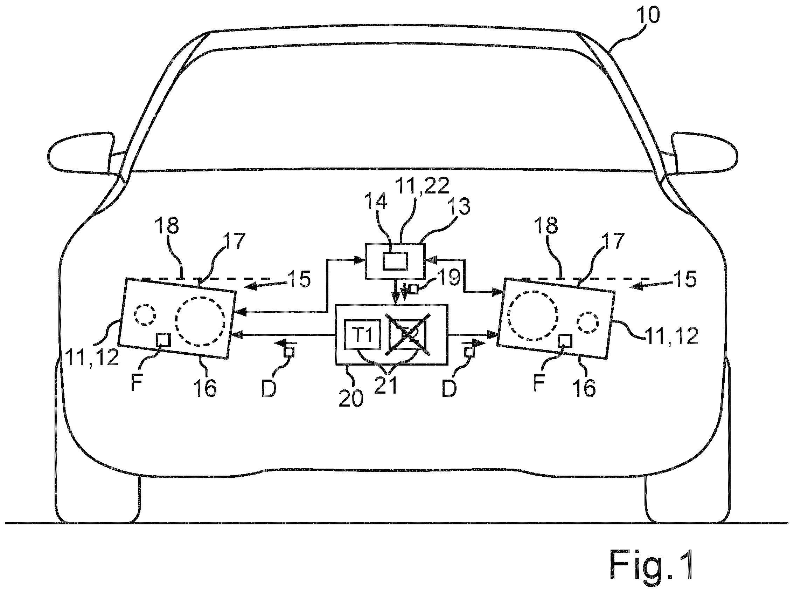

Fig. 1 zeigt ein Kraftfahrzeug 10, bei dem es sich um einen Kraftwagen, insbesondere um einen Personenkraftwagen oder Lastkraftwagen, handeln kann. In dem Kraftfahrzeug 10 kann ein Fahrzeuggerät 11 bereitgestellt sein, bei dem es sich in dem Beispiel um eine Scheinwerferanlage 12 handeln kann. Zu dem Fahrzeuggerät 11 kann ein Steuergerät 13 gehören.

Mittels beispielsweise des Steuergeräts 13 kann in dem Fahrzeuggerät 11 eine Selbstkalibrierroutine 14 durchgeführt werden. Die Selbstkalibrierroutine 14 kann beispielsweise während eines Fahrbetriebs des Kraftfahrzeugs 10 durchgeführt werden, während das Kraftfahrzeug 10 bereits durch einen Benutzer genutzt wird, also nachdem das Kraftfahrzeug 10 an einen Benutzer übergeben wurde. Die Selbstkalibrierroutine 14 kann beispielsweise dazu vorgesehen sein, dass eine tatsächliche Einbaulage 15 des Fahrzeuggeräts 11 oder zumindest einer Komponente des Fahrzeuggeräts 11 ermittelt wird und daraufhin gemäß der erkannten Einbaulage betrieben oder kalibriert werden, um z.B. eine Schräglage zu kompensieren. Im Beispiel der Scheinwerferanlage 12 kann beispielsweise ermittelt werden, wie Scheinwerfer 16 in dem Kraftfahrzeug 10 verbaut sind. Beispielsweise kann ein Einbauwinkel 17 ermittelt werden, welcher eine Schräglage der Scheinwerfer 16 beispielsweise in Bezug zu einer Horizontalen 18 beschreibt, wobei dies nur der Anschaulichkeit halber ein Beispiel ist.

Wird während des Fahrbetriebs durch die Selbstkalibrierroutine 14 die Einbaulage 15 ermittelt, so kann entsprechend eine Kompensation einer Schräglage oder einer anderen konkreten von einer Solllage oder Sollposition abweichende Einbaulage 15 kompensiert werden. Die Selbstkalibrierroutine 14 kann iterativ erfolgen und es können aktuelle Kalibrierzustandsdaten 19 bereitgestellt werden, welche den aktuellen Kalibrierzustand oder den aktuellen Fortschritt der Kalibrierung repräsentieren oder beschreiben. Die Kalibrierzustandsdaten 19 können beispielsweise durch eine Prozessorschaltung 20 empfangen werden, welche in Abhängigkeit von den Kalibrierzustandsdaten 19 entscheiden kann, welche Teilfunktionen 21 in dem Fahrzeuggerät 11 freigeschaltet oder blockiert werden sollen, indem den Kalibrierzustandsdaten 19 gemäß einer vorgegebenen Auswertevorschrift ein Fortschrittswert zugeordnet wird und in Abhängigkeit von dem aktuellen Fortschrittswert ein Konfigurationsdatensatz 26, der einen Konfigurationszustand des jeweiligen Fahrzeuggeräts 11 festlegen kann, aus mehreren vorgegebenen Konfigurationsdatensätzen 26 ausgewählt wird. Blockiert sollte eine Teilfunktion 21 dann werden, wenn die Selbstkalibrierroutine 14 die Selbstkalibrierung noch nicht ausreichend genau oder ausreichend fortgeschritten durchgeführt hat. Fig. 1 zeigt beispielsweise, dass zwei Teilfunktionen T1, T2 für das Fahrzeuggerät 11, beispielsweise die Scheinwerferanlage 12, bereitstehen. Während abhängig von den aktuellen Kalibrierzustandsdaten 19 die Teilfunktion T1 bereits verfügbar oder aktiviert wird, so dass ein Benutzer sie zur Aktivierung auswählen kann, ist in dem in Fig. 1 gezeigten Zustand die Teilfunktion T2 blockiert oder gesperrt, das heißt, sie kann in dem aktuellen Kalibrierzustand des Fahrzeuggeräts 11 durch den Benutzer nicht aktiviert oder ausgewählt werden. Eine Selbstkalibrierroutine 14 kann hier aus dem Stand der Technik entnommen sein, wo Selbstkalibrierroutinen im Zusammenhang beispielsweise mit Scheinwerferanlagen und/oder Kameras und/oder Fahrerassistenzsystemen bekannt sind.

Insbesondere ist aber vielmehr vorgesehen, eine Teilfunktion T1, T2, das heißt, eine Teilfunktion 21, nicht vollständig zu blockieren, sondern mittels eines jeweiligen Funktionsdatensatzes D zumindest einen Funktionsparameter F in dem Fahrzeuggerät 11, also beispielsweise der Scheinwerferanlage 12, mit einem jeweils geeigneten Wert für die Teilfunktion 21 zu setzen, der dem aktuellen Kalibrierzustand oder dem aktuellen Fortschritt der Selbstkalibrierroutine entspricht oder Rechnung trägt.

Mit anderen Worten kann ein Konfigurationsdatensatz D aus mehreren bereitgestellten oder vorbereiteten Konfigurationsdatensätzen 26 in Abhängigkeit von jeweils aktuellen Kalibrierzustandsdaten 19 ausgewählt werden und damit in der beschriebenen Weise der zumindest eine Funktionsparameter F in dem Fahrzeuggerät 11 gesetzt oder bedatet werden.

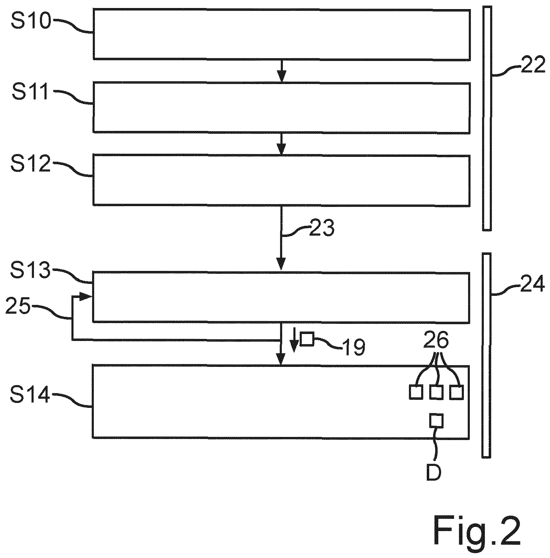

Fig. 2 veranschaulicht, wie das Kraftfahrzeug 10 auf der Grundlage der Prozessorschaltung 20 betrieben werden kann. Während eines Produktionsprozesses oder Herstellungsprozesses 22 kann in einem Schritt S10 das Fahrzeuggerät 11 in dem Kraftfahrzeug 10 eingebaut werden oder verbaut werden, das heißt, es kann beispielsweise die Scheinwerferanlage 12 in dem Kraftfahrzeug 10 verbaut werden. Hierdurch ergibt sich die Einbaulage 15, die beispielsweise durch den Einbauwinkel 17 gekennzeichnet sein kann.

Des Weiteren können für das Fahrzeuggerät 11, beispielsweise die Scheinwerferanlage 12, mittels einer Bedatung in einem Schritt S11 die möglichen Teilfunktionen 21 bereitgestellt oder verfügbar gemacht werden, wobei sie allerdings dann immer noch blockiert oder deaktiviert sind.

In einem Schritt S12 kann eine werksseitige oder kundendienstseitige initiale Kalibrierung vorgesehen sein. Danach kann eine Übergabe 23 an einen Benutzer erfolgen. Während eines Fahrbetriebs 24, die der Benutzer mit seinem Kraftfahrzeug 10 durchführt, kann in einem Schritt S13 die automatisierte Kalibrierung mittels der Selbstkalibrierroutine 14 erfolgen. Dies kann in mehreren Iterationen 25 durchgeführt werden. In Abhängigkeit von den sich ergebenden Kalibrierzustandsdaten 19 kann durch die Prozessorschaltung 20 in einem Schritt S14 jeweils je nach aktuellem Zustand der Selbstkalibrierroutine 14 oder des Fortschritts der Selbstkalibrierung eine Funktionsfreischaltung und/oder eine Funktionsanpassung mittels geeigneter Funktionsparameter F erfolgen.

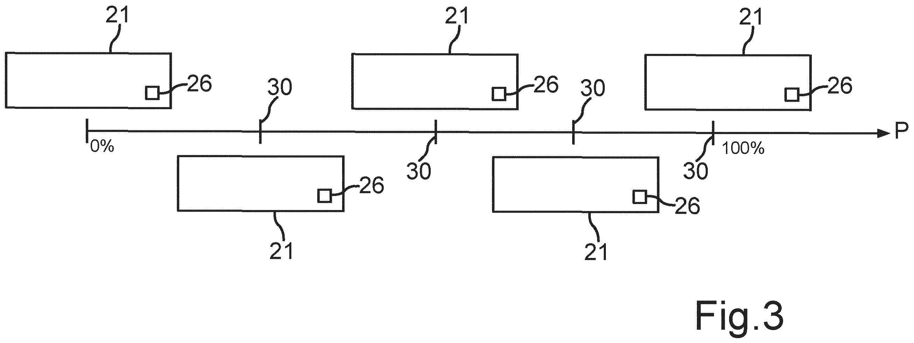

Fig. 3 veranschaulicht, wie in Abhängigkeit von einer Kalibriergüte, die als ein Fortschrittswert P (Progress) der Selbstkalibrierroutine 14 ausgedrückt sein kann, jeweils für zumindest eine Teilfunktion 21 eine Freischaltung und/oder ein geeigneter Konfigurationsdatensatz D ausgewählt werden kann. Im Folgenden ist dies anhand des Beispiels der Scheinwerferanlage 12 genauer beschrieben. Der Fortschrittswert P kann beispielsweise in einem Werteintervall von null Prozent bis 100 Prozent festgelegt oder definiert sein, wobei 0 Prozent den Zustand ohne Kalibrierung oder nach der initialen Kalibrierung aus dem Schritt S12 (siehe Fig. 2) darstellen kann, während 100 Prozent den erfolgreichen Abschluss der Selbstkalibrierroutine 14 im Kraftfahrzeug 10 beschreiben kann.

Für mehrere unterschiedliche Schwellenwerte 30 kann jeweils für zumindest eine Teilfunktion 21 jeweils ein Konfigurationsdatensatz 26 vorgesehen sein. Beispielsweise kann für P = 0 Prozent eine reine Freischaltung des Fernlichts (binär, nicht-dynamisches Fernlicht) und/oder eine Bereitstellung einer Projektion oder eines Leuchtmusters vorgesehen sein. Für P = 25 Prozent (nur beispielhafter Wert) kann zumindest ein weiteres Leuchtmuster bereitgestellt sein. Zusätzlich oder alternativ dazu kann für das Leuchtmuster aus P = null Prozent eine Auflösungserhöhung vorgesehen sein, was mit einem entsprechenden Konfigurationsdatensatz 26 eingestellt werden kann. Für P = 50 Prozent (beispielhafter Wert) kann beispielsweise eine Matrix-LED-Scheinwerferfunktion (LED - Light Emitting Diode) freigeschaltet werden und/oder mit einem Konfigurationsdatensatz 26 konfiguriert werden.

Zusätzlich oder alternativ dazu kann eine Schilder-Entblendung konfiguriert werden. Für P = 75 Prozent (beispielhafter Wert) kann beispielsweise eine Lückengröße für dynamisches Fernlicht (Abstand der Hell-Dunkel-Grenze zum entgegenkommenden Fahrzeug) im Vergleich zu den vorherigen Konfigurationsdatensätzen verringert werden. Zusätzlich oder alternativ dazu kann eine Ausleuchtungsbreite im Vergleich zu den vorherigen Konfigurationsdatensätzen 26 verringert sein. Für P = 100 Prozent (beispielhafter Wert) kann beispielsweise die Lückengröße auf einen minimalen Wert konfiguriert sein. Zusätzlich oder alternativ dazu kann eine Ausleuchtungsbreite für die Schilder-Entblendung auf einen minimalen Wert gesetzt werden, da nun die maximale Präzision verfügbar ist.

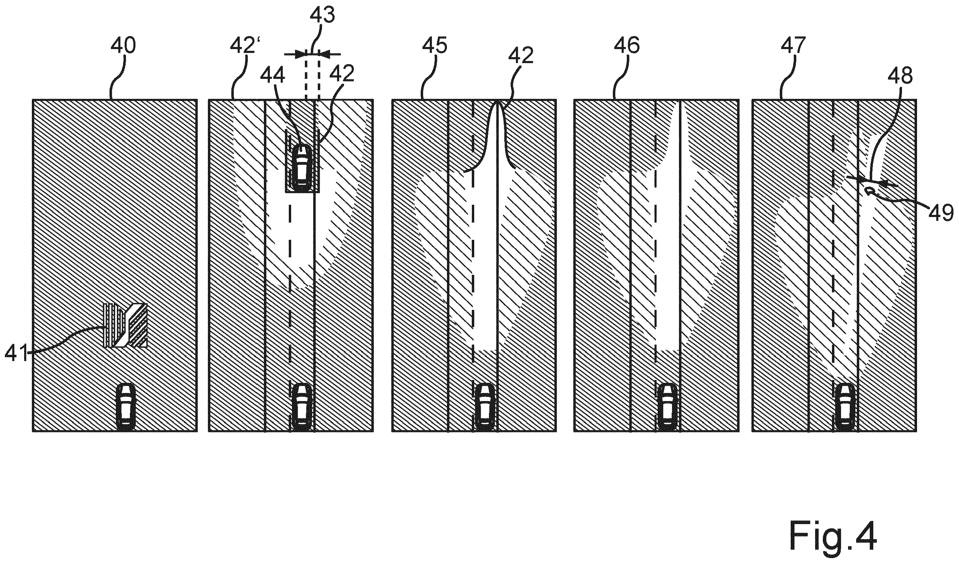

Fig. 4 veranschaulicht mögliche Funktionsparameter, die mittels eines jeweiligen Konfigurationsdatensatzes konfiguriert werden können. Diese Veranschaulichung geschieht am Beispiel der beschriebenen Scheinwerferanlage 12.

Mittels einer Lichtinszenierung 40 oder Projektion 40 kann ein Leuchtmuster 41 auf einen Fahrzeuguntergrund mittels der Scheinwerferanlage projiziert werden. Die Auswahl des Leuchtmusters und/oder eine Pixelauflösung oder Pixelgröße kann mittels eines Konfigurationsdatensatzes konfiguriert werden. Ein blendfreies Fernlicht 41 als Teilfunktion kann vorsehen, dass bei eine Fernlichtausleuchtung eine Hell-Dunkel-Grenze 42 einen vorbestimmten Abstand 43 zu einem vorausfahrenden oder entgegenkommenden Fremdfahrzeug 44 aufweist. Dieser Abstand 43 kann durch einen Konfigurationsdatensatz verändert oder variiert werden. Ein Spurlicht 45 kann beispielsweise in Bezug auf einen Verlauf der Hell-Dunkel-Grenze 42 konfiguriert werden. Zusätzlich oder alternativ dazu kann ein Orientierungslicht 46 konfiguriert werden. Ein Markierungslicht 47 kann beispielsweise in Bezug auf eine Winkelauflösung oder Breite 48 für eine Schilderentblendung eines erkannten Verkehrsschilds 49 konfiguriert werden.

Im Rahmen dieser Idee wird somit ein alternativer Ansatz der Funktionsfreischaltung beschrieben. Seitens Produktion / Kundendienst wird ein fachgerechter Einbau von Scheinwerfer, Projektor, Heckleuchte zwar sichergestellt (S10). Zudem erfolgt die Bedatung der zugehörigen Steuergeräte (S11). Die Kalibrierung aber entfällt oder wird mit grober Genauigkeit durchgeführt (z.B. Justage, Schritt S12). Dies spart Zeit in Produktion und Kundendienst. Somit entfallen die resultierenden Kosten zumindest zum Teil. Im Fahrbetrieb greift eine automatische Kalibrierung (z.B. nach DE 10 2013 105 506 A1). Der Algorithmus ermittelt sukzessive die Fehlstellung des Lichtmoduls oder Scheinwerfers. In Abhängigkeit einer Kalibriergüte gemäß den Kalibrierzustandsdaten 19, welche z.B. aus der Variation zwischen die Kalibrierergebnissen resultiert, werden die Lichtfunktionen sequentiell freigeschaltet oder performanter. Ein Beispiel: Ein Scheinwerfer mit Matrix-LED Funktionalität wird im Kundendienst getauscht. Es erfolgt eine Einstellung der Hell-Dunkel-Grenze des Abblendlichts auf den vorgeschriebenen Wert. Nun sei bei Kopplung von Abblend- und Fernlichtmodul von einer verbleibenden Toleranz auszugehen. Zunächst wird daher die auszublendende Lücke rund um Verkehrsteilnehmer vergrößert. Im laufenden Fahrbetrieb ermittelt eine automatische Kalibrierung die Scheinwerferfehlstellung mit zunehmender Qualität. In Abhängigkeit dieses Qualitätsparameters kann die Lückengröße sukzessive verkleinert werden. Das adaptive Fernlicht gewinnt an Performanz.

Ebenso ist eine Freischaltung von Lichtfunktionen wie Markierungslicht, Schilderentblendung, Bodenprojektionen, Spurlicht, etc. ab einer bestimmten Kalibrierqualität denkbar.

Die Kosten für Produktion und Kundendienst zur Inbetriebnahme der Beleuchtungsanlage sinken somit in vorteilhafter Weise.

Mit dem Fortschrittswert P wird eine Kalibriergüte ausgedrückt. Diese liefert eine Aussage über die Qualität der berechneten Fehlstellung. Beispielsweise kann die Variation der Kalibrierergebnisse verwendet werden, wenn sich das Ergebnis der "wahren" Fehlstellung nähert. Das Format der Kalibriergüte kann nach Bedarf gewählt werden. Z.B. generiert der Kalibrieralgorithmus ein Qualitätssignal im Bereich 0% (keine Kalibrierung erfolgt) bis 100% (vernachlässigbare Devianz im Ergebnis). Überschreitet die Kalibriergüte parametrierbare Schwellenwerte 30, so werden nach und nach die Lichtfunktionen freigeschaltet oder in ihrer Ausprägung angepasst.

Die Anzahl der Freischaltungs-/Optimierungsschritte ist frei wählbar. Auch ist die initiale (ggf. permanente) Freischaltung von Lichtfunktionen möglich. Im Rahmen dieser Idee wird sich explizit nicht auf bestimmte Lichtfunktionen festgelegt. Das Verfahren ist für alle (kalibrierrelevanten) Lichtfunktionen denkbar. Auch eine Sperrung von Funktionen in Abhängigkeit von der Kalibriergüte ist vorzusehen. Zur Kenntnisnahme des augenblickblichen Anlernstatus kann eine Rückmeldung für den Kunden umgesetzt werden. Z.B. hat er die Möglichkeit über die Fahrzeugeinstellungen den momentanen Inbetriebnahmezustand abzurufen. Dies sollte ansprechend und als Intelligenz des Fahrzeugs vermittelt werden. Gesetzt dem Fall der Freischaltung einer Funktion durch den Kunden oder den Kundendienst (z.B. über Function on Demand) ist eine Warnung, ggf. eine Sperrung der Funktion bei nicht freigeschalteter Funktion möglich.

Bevorzugt erfolgt die Anpassung von Funktionseigenschaften in Abhängigkeit der Kalibriergüte, insbesondere die Anpassung der Lückengröße vom Matrixbeam oder der Texturausprägung von hochauflösenden Projektionssystemen. Eine solche Ausprägung lässt die frühzeitige Funktionsfreischaltung mit zunehmender Optimierung zu, da mit der aktuelle verfügbaren Kalibiergüte gemäß Fortschrittswert bereits eine (eventuell eingeschränkter) Funktionsumfang bereitgestellt werden kann..

Die Sukzessives Freischaltung und Sperren von Teilfunktionen wie Schilderentblendung, Matrix-LED, usw. in Abhängigkeit einer Kalibriergüte (in beide Richtungen (zunehmende vs. abnehmende Güte)) sind bevorzugte Einsatzmöglichkeiten.

Die Veränderung der Funktionsausprägung in Abhängigkeit einer Kalibriergüte (in beide Richtungen (zunehmende vs. abnehmende Güte)) ist mittels Konfigurationsdatensätzen möglich. Hierzu zählen beispielsweise die Anpassung der Lückengröße vom Matrixbeam (große Lücken bei geringer Kalibriergüte und schmale Lücken bei hoher Güte) oder der Texturausprägung von hochauflösenden Projektionssystemen (z.B. detailarme oder breite Texturen bei geringer Kalibriergüte und detailreiche oder schmale Texturen bei hoher Güte)

Im Fahrbetrieb kann eine automatische Kalibrierung ausgewertet werden. Der Algorithmus der Selbstkalibrierroutine ermittelt sukzessive die Fehlstellung des Lichtmoduls. In Abhängigkeit einer Kalibriergüte, welche z.B. aus der Variation zwischen die Kalibrierergebnissen resultiert, werden die Lichtfunktionen sequentiell freigeschaltet oder performanter.

Insgesamt zeigen die Beispiele, wie ein Ansatz zur Funktionsfreischaltung von Lichtfunktionen in Abhängigkeit von einer Kalibriergüte bereitgestellt werden kann.

## Patentansprüche

1. Verfahren zum Steuern eines Konfigurationszustands zumindest eines Fahrzeuggeräts (11) eines Kraftfahrzeugs (10), wobei
durch eine Prozessorschaltung (20) einmalig oder wiederholt
aus einer Kalibiereinrichtung des jeweiligen Fahrzeuggeräts (11) und/oder eines von dem Fahrzeuggerät (11) genutzten Hilfsgeräts Kalibrierzustandsdaten (19) empfangen werden, die einen aktuellen Kalibrierzustand einer durch die Kalibriereinrichtung während eines Fahrbetriebs (24) des Kraftfahrzeugs (10) durchgeführten Selbstkalibrierroutine (14) signalisieren,
**dadurch gekennzeichnet, dass**
durch die Prozessorschaltung (20) den jeweils aktuellen Kalibrierzustandsdaten (19) gemäß einer vorgegebenen Auswertevorschrift ein Fortschrittswert zugeordnet wird und in Abhängigkeit von dem aktuellen Fortschrittswert ein Konfigurationsdatensatz (26), der einen Konfigurationszustand des jeweiligen Fahrzeuggeräts (11) festlegt, aus mehreren vorgegebenen Konfigurationsdatensätzen (26) ausgewählt wird, und das Fahrzeuggerät (11) mittels des ausgewählten Konfigurationsdatensatzes (26) konfiguriert wird, wobei durch den jeweiligen Konfigurationsdatensatz (26) zumindest ein Funktionsparameter (F) für die Ausführung zumindest einer Teilfunktion (21) festgelegt wird.

2. Verfahren nach Anspruch 1, wobei die Auswertevorschrift umfasst, dass die aktuellen Kalibrierzustandsdaten (19) auf ein vorbestimmtes Werteintervall abgebildet werden, durch welches ein Fortschritt der Selbstkalibrierroutine (14) als Zahlenwert beschrieben ist, und hierdurch den Kalibrierzustandsdaten (19) der Fortschrittswert aus dem Werteintervall zugeordnet wird.

3. Verfahren nach Anspruch 2, wobei anhand des ermittelten Fortschrittwerts mittels eines Schwellenwertvergleichs ermittelt wird, welcher der vorgegebenen Konfigurationsdatensätze (26) auszuwählen ist, wobei den mehreren, unterschiedlichen Schwellenwerten (30) jeweils ein anderer der Konfigurationsdatensätze (26) zugeordnet ist.

4. Verfahren nach einem der vorhergehenden Ansprüche, wobei durch den jeweiligen Konfigurationsdatensatz in der zumindest einen Teilfunktion (21) ein Parameterwert des zumindest einen Funktionsparameters (F) der Teilfunktion (21) eingestellt wird, wobei durch den Parameterwert bei einer Ausführung der Teilfunktion (21) eine Ausprägung eines Merkmals der Teilfunktion (21) und/oder ein Sicherheitsabstand für einen Justiervorgang und/oder eine Einsatzumgebung für die Teilfunktion (21) eingestellt wird.

5. Verfahren nach einem der vorhergehenden Ansprüche, wobei das zumindest eine Fahrzeuggerät (11) eine Scheinwerferanlage (12) umfasst und bei zumindest einer der folgenden Teilfunktionen (21) der Scheinwerferanlage (12) mittels des jeweiligen Konfigurationsdatensatzes (26) folgendes konfiguriert wird:
• bei einem adaptiven Fernlicht ein Abstand einer Ausleuchtlücke zu einem detektierten Fremdfahrzeug,
• bei einem Markierungslicht für Verkehrsobjekte am Straßenrand eine Mindestobjektgröße,
• bei einer Lichtinszenierung eine Auswahl eines auf einer Projektionsfläche einer Fahrzeugumgebung projizierten Leuchtmusters.

6. Verfahren nach einem der vorhergehenden Ansprüche, wobei das zumindest eine Fahrzeuggerät (11) ein Steuergerät (13) für eine automatisierte Spurführung (Lane-Assist-Funktionalität) umfasst und bei zumindest einer der folgenden Teilfunktionen (21) des Steuergeräts (13) mittels des jeweiligen Konfigurationsdatensatzes (26) folgendes konfiguriert wird:
bei einer automatisierten Spurhaltefunktion eine maximal zulässige Abweichung von einer Spurmittellinie, ab welcher eine Rückführung zur Spurmitte erfolgt.

7. Verfahren nach einem der vorhergehenden Ansprüche, wobei die Kalibrierzustandsdaten (19) eine Positionsangabe zu einer Geoposition zumindest eines Verkehrsobjekts in einer Fahrzeugumgebung signalisieren und der Fortschrittswert als eine Funktion einer Differenz der Positionsangabe und einer Referenzangabe berechnet wird.

8. Verfahren nach einem der vorhergehenden Ansprüche, wobei die Kalibrierzustandsdaten (19) eine Korrekturschrittweite signalisieren, die durch die Selbstkalibrierroutine (14) in einer vergangenen Iteration angewendet wurde, und die Korrekturschrittweite oder eine mittlere Schrittweite oder ein zeitlicher Gradient eines zeitlichen Verlaufs mehrerer vergangener Korrekturschrittweiten ermittelt und durch die Auswertevorschrift zu dem Fortschrittswert umgerechnet wird.

9. Verfahren nach einem der vorhergehenden Ansprüche, wobei über eine Ausgabeeinrichtung an einen Benutzer des Kraftfahrzeus eine Rückmeldung über den Fortschrittswert und/oder darüber, welcher Konfigurationsdatensatz (26) aktuell verwendet wird, ausgegeben wird.

10. Verfahren nach einem der vorhergehenden Ansprüche, wobei in dem Kraftfahrzeug (10) das jeweilige Fahrzeuggerät (11) mit seiner Selbstkalibrierroutine (14) und/oder das jeweilige Hilfsgeräts mit seiner Selbstkalibrierroutine (14) im unkalibrierten oder teilkalibrierten Zustand eingebaut wird und nach dem Einbau in einem Fahrbetrieb des Kraftfahrzeugs (10) die jeweilige Selbstkalibrierroutine (14) zum Finalisieren der Kalibrierung betrieben wird.

11. Prozessorschaltung (20), die dazu eingerichtet ist, ein Verfahren nach einem der Ansprüche 1 bis 9 durchzuführen.

12. Prozessorschaltung (20) nach Anspruch 11, wobei die Prozessorschaltung (20) zumindest ein Steuergerät (13) und/oder einen Zentralrechner für ein Kraftfahrzeug (10) und/oder einen Backendserver für das Internet umfasst.

13. Kraftfahrzeug (10) mit einer Prozessorschaltung (20) nach Anspruch 11 oder 12.

## Claims

1. A method for controlling a configuration state of at least one vehicle device (11) of a motor vehicle (10), wherein
calibration state data (19) are received, once or repeatedly, from a calibration apparatus of the vehicle device (11) in question and/or an auxiliary device used by the vehicle device (11) by a processor circuit (20), which calibration state data signal a current calibration state of a self-calibration routine (14) performed by the calibration apparatus during driving operation (24) of the motor vehicle (10), **characterized in that**
by means of the processor circuit (20), a progress value is assigned to the current calibration state data (19) in accordance with a predefined evaluation specification, and a configuration data set (26) defining a configuration state of the vehicle device (11) in question is selected from a plurality of predefined configuration data sets (26) in accordance with the current progress value, and the vehicle device (11) is configured by means of the selected configuration data set (26), wherein at least one function parameter (F) for the execution of at least one sub-function (21) is defined by means of the respective configuration data set (26).

2. The method according to claim 1, wherein the evaluation specification includes the fact that the current calibration state data (19) are mapped to a predetermined value interval, by means of which progress of the self-calibration routine (14) is described as a numerical value, and as a result the progress value from the value interval is assigned to the calibration state data (19).

3. The method according to claim 2, wherein on the basis of the ascertained progress value, by means of a threshold value comparison, it is ascertained which of the predefined configuration data sets (26) is to be selected, wherein a different one of the configuration data sets (26) is assigned to the plurality of different threshold values (30).

4. The method according to any of the preceding claims, wherein a parameter value of the at least one function parameter (F) of the at least one sub-function (21) is set in the at least one sub-function (21) by means of the configuration data set in question, wherein a characteristic of a feature of the sub-function (21) and/or a safety distance for an adjustment process and/or an operational environment for the sub-function (21) is set by the parameter value when configuring the sub-function (21).

5. The method according to any of the preceding claims, wherein the at least one vehicle device (11) comprises a headlight system (12), and the following is configured by means of the configuration data set (26) in question in at least one of the following sub-functions (21) of the headlight system (12):
• for adaptive high beam, a distance of a gap in illumination from another detected vehicle,
• for a marking light for traffic objects on the roadside, a minimum object size,
• for a light show, selecting a light pattern that is projected onto a projection surface in the surroundings of the vehicle.

6. The method according to any of the preceding claims, wherein the at least one vehicle device (11) comprises a control device (13) for automated lane keeping (lane assist functionality), and the following is configured by means of the configuration data set (26) in question in at least one of the following sub-functions (21) of the control device (13):
for an automated lane-keeping function, a maximum permissible deviation from a center line of the lane from which guidance back to the center of the lane is performed.

7. The method according to any of the preceding claims, wherein the calibration state data (19) signal a position indication of a geolocation of at least one traffic object in the surroundings of the vehicle and the progress value is calculated as a function of a difference between the position indication and a reference indication.

8. The method according to any of the preceding claims, wherein the calibration state data (19) signal a correction increment which has been applied by the self-calibration routine (14) in a previous iteration, and the correction increment or an average increment or a time gradient of a time curve of a plurality of previous correction increments is ascertained and is converted into the progress value by the evaluation specification.

9. The method according to any of the preceding claims, wherein feedback regarding the progress value and/or regarding which configuration data set (26) is currently being used is output to a user of the motor vehicle by means of an output apparatus.

10. The method according to any of the preceding claims, wherein the vehicle device (11) in question together with its self-calibration routine (14) and/or the auxiliary device in question together with its self-calibration routine (14) are integrated in the motor vehicle (10) in the uncalibrated or partially calibrated state and, following integration in a driving operation of the motor vehicle (10), the self-calibration routine (14) in question is run to finalize the calibration.

11. A processor circuit (20) configured to carry out a method according to any of claims 1 to 9.

12. The processor circuit (20) according to claim 11, wherein the processor circuit (20) comprises at least one control device (13) and/or one central computer for a motor vehicle (10) and/or a backend server for the Internet.

13. A motor vehicle (20) comprising a processor circuit (10) according to claim 11 or 12.

## Revendications

1. Procédé pour commander un état de configuration d'au moins un appareil de véhicule (11) d'un véhicule à moteur (10), dans lequel
en utilisant un circuit processeur (20) une ou plusieurs fois
à partir d'un dispositif d'étalonnage de l'appareil de véhicule (11) respectif et/ou d'un appareil auxiliaire utilisé par l'appareil de véhicule (11), des données d'état d'étalonnage (19) sont reçues, qui signalent un état d'étalonnage actuel d'une routine d'auto-étalonnage (14) effectuée par le dispositif d'étalonnage pendant une opération de conduite (24) du véhicule à moteur (10),
**caractérisé en ce que**
une valeur de progression est associée par le circuit de processeur (20) aux données (19) d'état d'étalonnage respectives actuelles selon une règle d'évaluation prédéfinie et, en fonction de la valeur de progression actuelle, un ensemble (26) de données de configuration qui détermine un état de configuration de l'appareil de véhicule (11) respectif, est sélectionné parmi plusieurs ensembles (26) de données de configuration prédéfinis, et l'appareil de véhicule (11) est configuré au moyen de l'ensemble (26) de données de configuration sélectionné, où au moins un paramètre de fonction (F) pour l'exécution d'au moins une sous-fonction (21) est défini par l'ensemble (26) de données de configuration respectif.

2. Procédé selon la revendication 1, dans lequel la règle d'évaluation comprend que les données (19) d'état d'étalonnage actuelles sont représentées sur un intervalle de valeurs prédéterminé, par lequel une progression de la routine d'auto-étalonnage (14) est décrite en tant que valeur numérique, et la valeur de progression est ainsi attribuée aux données (19) d'état d'étalonnage à partir de l'intervalle de valeurs.

3. Procédé selon la revendication 2, dans lequel la valeur de progression déterminée est utilisée pour déterminer lequel des ensembles (26) de données de configuration prédéterminés doit être sélectionné au moyen d'une comparaison de valeurs seuil, dans lequel chacune des multiples valeurs seuil (30) différentes est associée à un ensemble différent parmi les ensembles de données de configuration (26).

4. Procédé selon l'une des revendications précédentes, dans lequel une valeur de paramètre de l'au moins un paramètre (F) de fonction de la sous-fonction (21) est réglée par l'ensemble de données de configuration respectif dans l'au moins une sous-fonction (21), dans lequel la valeur du paramètre lors d'une exécution de la sous-fonction (21) permet de régler une expression d'une caractéristique de la sous-fonction (21) et/ou une distance de sécurité pour une opération d'ajustage et/ou un environnement d'utilisation pour la sous-fonction (21).

5. Procédé selon l'une des revendications précédentes, dans lequel l'au moins un appareil de véhicule (11) comprend un système de phares (12) et, pour au moins une des sous-fonctions (21) suivantes du système de phares (12), ce qui suit est configuré au moyen de l'ensemble (26) de données de configuration correspondant :
• avec un feu de route adaptatif, une distance d'un écart d'éclairage vers un véhicule tiers détecté,
• pour un feu de balisage d'objets de circulation en bord de route, une taille minimale d'objet,
• dans une production lumineuse, une sélection d'un motif lumineux projeté sur une surface de projection d'un environnement de véhicule.

6. Procédé selon l'une des revendications précédentes, dans lequel l'au moins un appareil de véhicule (11) comprend un appareil de commande (13) pour un guidage de voie automatisé (fonctionnalité d'assistance de maintient de voie) et, pour au moins l'une des sous-fonctions (21) suivantes du dispositif de commande (13), ce qui suit est configuré au moyen de l'ensemble (26) de données de configuration respectif :
dans le cas d'une fonction de maintien de voie automatisée, un écart maximal admissible par rapport à une ligne médiane de voie, à partir duquel un retour au centre de voie a lieu.

7. Procédé selon l'une des revendications précédentes, dans lequel les données (19) d'état d'étalonnage signalent une information de position concernant une géolocalisation d'au moins un objet de circulation dans un environnement de véhicule et la valeur de progression est calculée en tant que fonction d'une différence entre l'information de position et une information de référence.

8. Procédé selon l'une des revendications précédentes, dans lequel les données (19) d'état d'étalonnage signalent une largeur de pas de correction qui a été appliquée par la routine d'auto-étalonnage (14) lors d'une itération passée, et la largeur de pas de correction ou une largeur de pas moyenne ou un gradient temporel d'une évolution temporelle de plusieurs largeurs de pas de correction passées est déterminé et est converti en valeur de progression par la règle d'évaluation.

9. Procédé selon l'une des revendications précédentes, dans lequel un retour d'informations sur la valeur de progression et/ou sur l'ensemble (26) de données de configuration actuellement utilisé est transmis à un utilisateur du véhicule à moteur via un dispositif de sortie.

10. Procédé selon l'une des revendications précédentes, dans lequel, dans le véhicule à moteur (10), l'appareil de véhicule (11) respectif avec sa routine d'auto-étalonnage (14) et/ou l'appareil auxiliaire respectif avec sa routine d'auto-étalonnage (14) est installé dans l'état non étalonné ou partiellement étalonné et après l'installation, dans une opération de conduite du véhicule à moteur (10), la routine d'auto-étalonnage (14) respective est mise en oeuvre pour finaliser l'étalonnage.

11. Circuit processeur (20) conçu pour mettre en oeuvre un procédé selon l'une des revendications 1 à 9.

12. Circuit processeur (20) selon la revendication 11, le circuit processeur (20) comprenant au moins un appareil de commande (13) et/ou une unité centrale pour véhicule à moteur (10) et/ou un serveur de gestion pour Internet.

13. Véhicule à moteur (10) équipé d'un circuit processeur (20) selon la revendication 11 ou 12.
